# EUROPÄISCHE PATENTSCHRIFT

(11) **EP 2 737 273 B1**
(45) Veröffentlichungstag und Bekanntmachung des Hinweises auf die Patenterteilung: **06.07.2016**
(21) Anmeldenummer: 12740335.0
(22) Anmeldetag: 19.07.2012
(51) Int. Cl.: F28G 15/00, F23J 3/02, F28G 1/16, F28G 3/16, F22B 37/56

(54) **VERFAHREN ZUR ERHÖHUNG DES WIRKUNGSGRADES EINER VERBRENNUNGSANLAGE, INSBESONDERE EINES MÜLLVERBRENNUNGS- ODER BIOMASSEKRAFTWERKES**
METHOD FOR ENHANCING THE EFFICIENCY OF AN INCINERATION PLANT, IN PARTICULAR OF A WASTE INCINERATION BIOMASS POWER PLANT
PROCÉDÉ D'AMÉLIORATIOHN DE L'EFFICACITÉ D'UNE INSTALLATION D'NCINÉRATION, EN PARTICULIER DE L'NCINÉRATION DE DÉCHETS OU D'UNE CENTRALE DE BIOMASSE

(30) Priorität: 25.07.2011 DE 102011108327
(43) Veröffentlichungstag der Anmeldung: 04.06.2014
(73) Patentinhaber: Clyde Bergemann GmbH Maschinen- und Apparatebau, 46485 Wesel (DE)
(72) Erfinder: MUELLER, Christian, 44149 Dortmund (DE); FRACH, Manfred, 46485 Wesel (DE); BECKMANN, Michael, 01187 Dresden (DE); ROSTKOWSKI, Slawomir, 01097 Dresden (DE)
(74) Vertreter: Rössler, Matthias
(86) Internationale Anmeldenummer: PCT/EP2012/064166
(87) Internationale Veröffentlichungsnummer: WO 2013/014058

(56) Entgegenhaltungen:
- WO-A2-2011/135081
- US-A- 4 488 516
- US-A- 4 552 098
- US-A- 4 571 094
- US-A1- 2004 159 270
- ZOLZER K ET AL: "EINSATZ DES KESSEL-DIAGNODE-SYSTEMS KEDI IM KRAFTWERK STAUDINGER 5.ÖREALISIERUNG UND BETRIEBSERFAHRUNG", VGB KRAFTWERKSTECHNIK, VGB KRAFTWERKSTECHNIK GMBH. ESSEN, DE, Bd. 75, Nr. 9, 1. September 1995 (1995-09-01), Seiten 755-762, XP000525900, ISSN: 0372-5715
- SIMON S ET AL: "LEISTUNGSSTEIGERUNG VON DAMPFERZEUGERN BEIM EINSATZ UNTERSCHIEDLICHER KOHLEQUALITAETEN DURCH NEUE INTELLIGENTE ON-LOAD-REINIGUNGSTECHNOLOGIE//INCREASE OF STEAM GENERATOR OUTPUT FIRING COAL QUALITIES THROUGH NEW INTELLIGENT ON-LOAD CLEANING TECHNOLOGY", VGB POWERTECH, VGB POWERTECH, ESSEN, DE, Bd. 86, Nr. 11, 1. Januar 2006 (2006-01-01), Seiten 40-43, XP001501994, ISSN: 1435-3199

## Beschreibung

Die vorliegende Erfindung betrifft ein Verfahren zur Erhöhung des Wirkungsgrades einer Verbrennungsanlage, insbesondere eines Müllverbrennungs- oder Biomassekraftwerkes, wobei die Verbrennungsanlage mit mindestens einem Wasserlanzenbläser, einem Sprühreinigungssystem und/oder einem Rußbläser zur Reinigung von dem Wärmetausch zu einem Wärmeübertragungsmedium dienenden Wänden ausgestattet ist.

Der Wirkungsgrad oder die Verfügbarkeit von Verbrennungsanlagen wird durch Verbrennungsrückstände auf Wänden und Komponenten dieser Anlagen und die zu deren Beseitigung erforderlichen Reinigungs- und Wartungsarbeiten verringert. Im Stand der Technik sind Verfahren bekannt, die es ermöglichen, diese Flächen während des Betriebes der Anlage zu reinigen. Insbesondere werden hierzu Wasser, Dampf und Luft verwendet und mit Hilfe von Wasserlanzenbläsern, Sprühreinigungssystemen, Rußbläsern und anderen Reinigungseinrichtungen eingesetzt. Die Wirkung der Reinigung ist von zahlreichen Parametern des Reinigungsprozesses sowie von der Dicke der Ablagerungsschicht und deren Zusammensetzung abhängig. Es wurden schon verschiedene Wege beschritten, den Reinigungsvorgang effektiv zu gestalten und seine Wirkung zu überwachen. Einzelheiten dazu sind beispielsweise in der EP 1 979 701 B1 beschrieben, aus der auch die grundsätzlichen Bauteile einer Verbrennungsanlage und geeigneter Reinigungsvorrichtungen bekannt sind.

Aus einem Vortrag "Erhöhung der Dampferzeugereffizienz durch selektive On-Load Kesselreinigung von Christian Mueller, Daniel Bartels, Dirk Hadder und Manfred Frach, VDI-Wissensforum, VDI-Fachkonferenz "Flexibilitäts- und Effizienzsteigerung von Bestandskraftwerken", 4. November 2010, ergibt sich, dass es für eine effektive Reinigung von besonderem Vorteil ist, eine möglichst genaue Gesamtbilanz aller Energieströme eines Verbrennungskraftwerkes zu betrachten, um erkennen zu können, wann eine Reinigung sinnvoll ist. Allerdings ist es nicht immer möglich, aus einer Gesamtbilanz auch herauszulesen, welche Wärmetauscherflächen eine Veränderung verursacht haben. Für einige Komponenten können Gewichtssensoren eingesetzt werden, wobei aus der Veränderung des Gewichtes auf die Masse der Ablagerungen geschlossen wird. Dies ist auch in der WO 2007/028447 A1 beschrieben. Allerdings gibt es, insbesondere in Müllverbrennungs- oder Biomassekraftwerken, viel mehr zu reinigende Wärmetauscherflächen als durch Gewichtssensoren selektiv beobachtet werden können. Dies betrifft insbesondere Kesselwände, Leerzüge und dergleichen.

Die WO 2011/135081 A2 offenbart ein Verfahren zur Temperaturkontrolle von Dampf in einem Kessel einer technischen Anlage. Ziel des Verfahrens ist es eine Verschmutzung an Wärmetauscheroberflächen mittels Rußbläsern derart einzustellen, dass Dampftemperaturen gezielt geregelt werden können. Weiterhin sollen Verdampferflächen und Überhitzerflächen derart gereinigt werden, dass die Wärmeleistung an einem Verdampfer und an einem Überhitzer so verteilt wird, dass einerseits Dampf-Sollwerttemperaturen erreicht und andererseits zulässige Grenzwerte nicht überschritten werden.

Aus der EP 1 760 441 B1 und der US 6,848,373, welche jeweils den Oberbegriff des Anspruchs 1 offenbaren, sind auch bereits Systeme zur Wärmeflussmessung in Wänden von Verbrennungsanlagen bekannt, mit deren Hilfe man auch bereits einige Aussagen über das Vorhandensein und die Eigenschaften von Ablagerungsschichten auf Wärmetauscherflächen treffen kann.

Bei systematischen Messungen an einer Müllverbrennungsanlage hat sich jedoch herausgestellt, dass allein aufgrund von Wärmeflussmessungen nicht ohne Weiteres eine zuverlässige Aussage über Vorhandensein und Qualität bzw. Dicke einer Ablagerungsschicht getroffen werden kann. Dies liegt unter anderem daran, dass Verbrennungsanlagen, insbesondere Müllverbrennungs- und Biomassekraftwerke, mit unterschiedlicher Last und zum Teil stark verschiedenen Betriebsbedingungen betrieben werden können. Es können Brennstoffe mit unterschiedlichem Heizwert und unterschiedliche Mengen von Verbrennungsluft pro Zeiteinheit zugeführt werden. Daraus ergeben sich Änderungen des Wärmeflusses in den Wänden der Anlage, die nicht oder jedenfalls nicht ausschließlich auf Ablagerungen zurückzuführen sind. Insbesondere können auch Verschiebungen im Wärmefluss von einem Wandbereich zu einem anderen Wandbereich auftreten, ohne dass sich die ausgekoppelte Wärmemenge dabei verändern muss.

Wegen der mit einem Reinigungsvorgang verbundenen Belastung einer Wandfläche, insbesondere durch thermische Spannungen, ist man bemüht, Reinigungsvorgänge nur auszulösen, wenn diese wirklich erforderlich sind. Auch sinkt der Wirkungsgrad einer Verbrennungsanlage aufgrund des zugeführten Wassers oder Dampfes während des Reinigungsvorgangs ab, was ebenfalls gegen zu häufige Reinigungen spricht. Umgekehrt senken aber tatsächlich vorhandene Beläge die Wärmeübertragung durch die betreffenden Wandbereiche, was im Ergebnis dazu führt, dass weniger Wärme ausgekoppelt werden kann und mehr Wärme mit dem Abgas verlorengeht. Es ist daher durchaus erwünscht, solche Zustände, möglichst sogar spezifisch für einzelne Teilflächen, zu erkennen und durch eine Auslösung eines Reinigungsvorgangs zu beseitigen.

Aus systematischen Untersuchungen weiß man auch, dass nicht alle Teilflächen der Wärme übertragenden Wände gleichmäßig Ablagerungen ansammeln und dass auch eine bestimmte Stelle bei unterschiedlichen Betriebsbedingungen verschieden schnell Ablagerungen annimmt. Aus diesem Grund sind Wärmeflussmessungen in verschiedenen Wandbereichen sehr hilfreich, um Anhaltspunkte für die Notwendigkeit einer Reinigung zu erlangen, allein aber nicht immer ausreichend, um sicher bestimmen zu können, wann und ob eine Reinigung ausgelöst werden soll.

Aufgabe der vorliegenden Erfindung ist es, eine Regelung der Reinigungsintervalle einer Teilfläche der Wärme übertragenden Wände einer Verbrennungsanlage anzugeben, durch die das Auslösen unnötiger oder vorzeitiger Reinigungsvorgänge vermieden, aber eine Reinigung bei tatsächlichem Bedarf ausgelöst wird, um den Wirkungsgrad der Gesamtanlage hoch zu halten.

Zur Lösung dieser Aufgabe dient ein Verfahren nach dem Anspruch 1. Vorteilhafte Ausgestaltungen und Weiterbildungen des Verfahrens, die einzeln oder in Kombination miteinander angewendet werden können, sind in den abhängigen Ansprüchen beschrieben.

Das erfindungsgemäße Verfahren zur Erhöhung des Wirkungsgrades einer Verbrennungsanlage, insbesondere eines Müllverbrennungs- oder Biomassekraftwerkes, wobei die Verbrennungsanlage einen Rauchgasauslass für Rauchgas mit einer Rauchgastemperatur aufweist sowie mindestens eine Wärme auf ein Wärmeträgermedium übertragende Wärmetauscherwand, von der zumindest eine erste vorgegebene Teilfläche während des Betriebes der Verbrennungsanlage durch Ablagerungen in ihrer Funktion beeinträchtigt und deshalb in vorgebbaren Zeitintervallen durch ein Reinigungsmedium aus einer Reinigungseinrichtung, insbesondere mindestens einen Wasserstrahl aus einem Wasserlanzenbläser, mindestens einen Wassertröpfchenkegel aus einem Sprühreinigungssystems oder mindestens einen Dampf- oder Luftstrahl aus einem Rußbläser, abgereinigt wird, zeichnet sich dadurch aus, dass die Zeitintervalle anhand von Wärmestrommessungen an der ersten Teilfläche und/oder der daraus ermittelten zeitlichen Veränderung des Wärmestromes durch die Teilfläche geregelt werden, wobei eine Abreinigung nur ausgelöst wird, wenn ein erster vorgebbarer Schwellwert des Wärmestromes unterschritten wird und gleichzeitig mindestens eine der folgenden Bedingungen erfüllt ist:
- die zeitliche Veränderung des Wärmestromes unterschreitet einen zweiten vorgebbaren Schwellwert,
- die Differenz zu einem an einer zweiten Teilfläche als Referenz gemessenen Wärmestrom überschreitet einen vorgebbaren Differenzwert,
- die Rauchgastemperatur überschreitet einen zuvor ermittelten und gespeicherten Erfahrungswert, der für ähnliche Betriebsbedingungen der Verbrennungsanlage nach einer früher vorgenommenen Abreinigung der ersten Teilfläche ermittelt wurde, um einen vorgegebenen Betrag,
- es ist eine vorgebbare Mindestzeit seit der letzten Reinigung vergangen,
- es findet keine gleichzeitige Reinigung einer anderen Teilfläche statt,
- die Verbrennungsanlage ist seit einem vorgebbaren Zeitintervall in einem stationären Betriebszustand.

Die Erfindung geht insbesondere von der Erkenntnis aus, dass Wärmestrommessungen an der vorgegebenen Teilfläche eine wesentliche Information zur Auslösung eines Reinigungsvorganges liefern, jedoch auch Situationen auftreten können, an denen eine solche Messung allein für eine Beurteilung der Ablagerungssituation nicht ausreicht. Insbesondere besteht die Möglichkeit, dass der Wärmestrom sich verringert, weil der Arbeitspunkt der Anlage verändert, also beispielsweise die Energieerzeugung verringert wird. Auch der Einsatz eines Brennstoffes mit einem geringeren Heizwert oder die Veränderung der Menge an Verbrennungsluft kann zu Verringerungen der gemessenen Wärmeströme führen, ohne dass tatsächlich schon eine der Abreinigung bedürfende Ablagerungsschicht vorhanden ist. Die vorliegende Erfindung zielt darauf ab, mindestens eine zusätzliche Information zusätzlich für die Regelung zu verarbeiten, durch die geklärt werden kann, ob eine Unterschreitung des Wärmestromes durch die vorgegebene Teilfläche unter einen ersten vorgegebenen Schwellwert tatsächlich auf Ablagerungen zurückzuführen ist oder auf andere Ursachen. Hierfür können die verschiedenen genannten Bedingungen bezüglich Wärmeflussmessungen und konventioneller Messtechnik einzeln oder in Kombination herangezogen werden.

Wenn der gemessene Wärmestrom unterhalb des ersten vorgebbaren Schwellwertes liegt und gleichzeitig nur noch eine geringe zeitliche Veränderung des Wärmestromes erfolgt, diese also einen zweiten vorgebbaren Schwellwert unterschreitet, kann dies als Hinweis gelten, dass in der Anlage ein zumindest fast konstanter Betrieb vorliegt und die geringe Wärmeübertragung durch die Teilfläche tatsächlich durch eine Ablagerung verursacht wird.

Eine weitere Möglichkeit zur Gewinnung von Zusatzinformationen ist auch der Vergleich mit dem Wärmefluss durch mindestens eine andere Teilfläche oder Referenzfläche. Bei der Inbetriebnahme und während des Betriebes einer Verbrennungsanlage können Teilflächen identifiziert werden, die weniger und/oder langsamer Ablagerungen als andere Teilflächen ansammeln und daher als Vergleichsflächen dienen können. Auch gerade gereinigte Flächen kommen als Vergleichsflächen in Betracht. Eine Teilfläche, deren Wärmefluss um einen vorgebbaren Differenzbetrag von dem einer Vergleichsfläche abweicht, muss im Allgemeinen gereinigt werden.

Eine wichtige Information kann auch die Rauchgastemperatur liefern, da diese immer dann steigt, wenn wegen Ablagerungen auf den Wärmetauscherwänden weniger Wärme ausgekoppelt werden kann. Zwar ist die Abgastemperatur unspezifisch bezüglich der Zuordnung zu einzelnen Teilflächen, nicht jedoch bezüglich der Frage, ob konstante Betriebsbedingungen vorliegen und welche Wärmeverluste im Abgas auftreten. Sinkt die Abgastemperatur nach der Reinigung einer Teilfläche, so kann diese Information sogar bei ansonsten konstanten Betriebsbedingungen auch der Kontrolle der Funktionsfähigkeit der Regelung dienen. Für eine Verbrennungsanlage können Abgastemperaturen regelmäßig gemessen und als Erfahrungswerte bestimmten Betriebsbedingungen zugeordnet und gespeichert werden. Ein Anstieg der Abgastemperatur über einen Erfahrungswert für die jeweiligen Betriebsbedingungen deutet auf Ablagerungen an den Wärmetauscherflächen hin und durch Wärmeflussmessungen können die am stärksten betroffene(n) Teilfläche(n) identifiziert werden. Eine Reinigung kann dann aufgrund einer Auswertung der Kombination aus erfassten Messdaten und Erfahrungswerten gezielt ausgelöst werden. Oft kann es zur Vermeidung zu häufiger Reinigungsvorgänge ausreichen, bestimmte Mindestzeiten zwischen zwei Reinigungsvorgängen abzuwarten und erst danach eine Reinigung bei entsprechend abgesunkenem Wärmefluss zuzulassen.

Da auch in der Nähe einer Teilfläche durchgeführte Reinigungsvorgänge anderer Teilflächen den Wärmefluss in der Teilfläche absenken können, kann es erforderlich sein, die gleichzeitige Reinigung bestimmter Teilflächen auszuschließen.

Im Allgemeinen führt es zu besseren Ergebnissen, wenn die Regelung zwei oder mehr der Bedingungen einschließt, vorzugsweise sogar alle.

Bei manchen Verbrennungsanlagen, insbesondere bei Müllverbrennungs- und Biomassekraftwerken, wird ein Bilanzwert anhand eines während des Betriebes durchgeführten Bilanzierungsmodells aller Energie- und Massenströme zu und aus der Verbrennungsanlage kontinuierlich oder periodisch ermittelt, der das Verhältnis von in der Verbrennungsanlage durch Übertragung in ein Wärmeträgermedium genutzter Energie zu ungenutzter Energie angibt. Ein solcher Bilanzwert und Daten aus einem solchen Bilanzierungsmodell haben einen hohen Informationsgehalt, wobei die Wirkung einer Abreinigung einer Teilfläche der Wände auf den Bilanzwert und auf dessen Integral über die Zeit erfindungsgemäß zur Regelung oder Korrektur der vorgebbaren Zeitintervalle verarbeitet werden kann.

Auch die Auswirkungen einer Reinigung einer Teilfläche auf Wärmeströme in anderen, insbesondere benachbarten Teilflächen können erfindungsgemäß in die Regelung einbezogen werden. Insbesondere bei in Strömungsrichtung der Rauchgase hintereinander liegenden Teilflächen können so wechselseitige Auswirkungen einer Reinigung bei der Regelung der Reinigungsintervalle berücksichtigt werden. Dies kann sich beispielsweise so auswirken, dass eine Teilfläche seltener gereinigt wird als die gemessenen Wärmeflüsse allein auslösen würden, weil benachbarte Flächen den geringeren Wärmeaustausch der Teilfläche bis zu einem gewissen Grad durch höhere Wärmeflüsse kompensieren können. Solche Vorgänge lassen sich sogar anhand eines Bilanzierungsmodells recht genau erkennen und Erlauben eine Überprüfung der Regelungsvorgänge auf ihren Einfluss auf den Wirkungsgrad der Gesamtanlage. Je feinere Bilanzierungsmodelle zur Verfügung stehen und je mehr Erfahrungswerte für verschiedene Betriebszustände gespeichert sind, desto genauer lässt sich Zeitpunkt und Ort einer Reinigung bestimmen. Eine automatisierte Regelung der Reinigungszyklen wird dadurch möglich. Dabei kann das System sogar neue Messergebnisse als Erfahrungswerte speichern und damit in gewissem Sinne selbstlernend arbeiten.

Die Erfindung und ihr Umfeld werden anhand der Zeichnung im Folgenden erläutert und näher beschrieben.

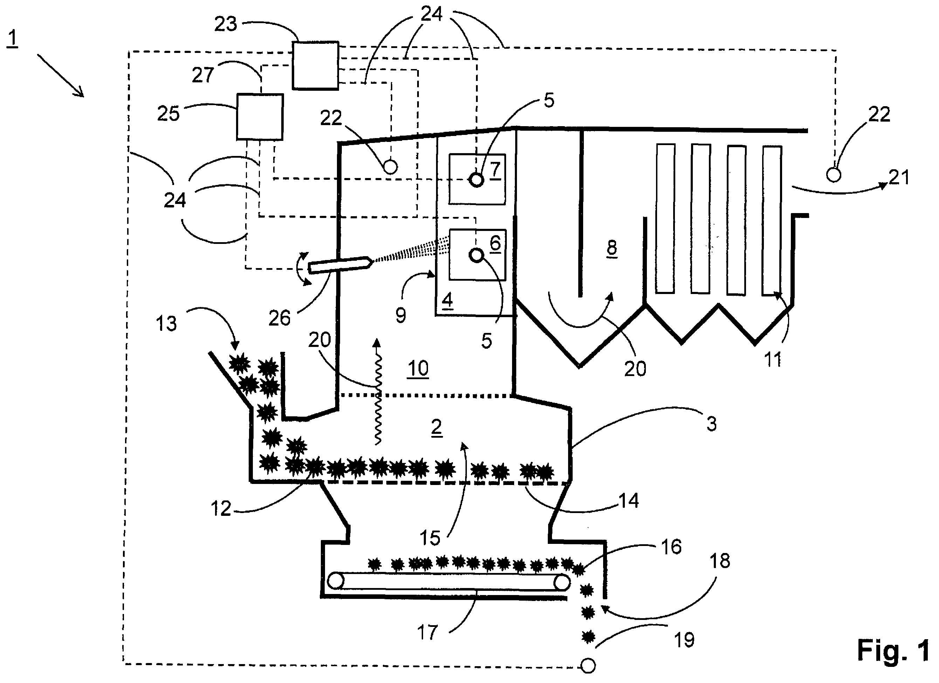

Die Fig. 1 zeigt schematisch eine Verbrennungsanlage, nämlich ein Müllverbrennungskraftwerk, mit einer Ausrüstung für das erfindungsgemäße Verfahren.

Die Verbrennungsanlage 1 in Fig. 1 entspricht einer typischen Bauweise für eine Müllverbrennungsanlage. Über einem Brennraum 2 befindet sich ein Kessel 3 mit Wärmetauscherwänden 4, an denen außen Wärmestromsensoren 5 angeordnet sind. Im Allgemeinen ist eine große Zahl solcher Wärmestromsensoren 5 vorhanden. Mit diesen Wärmestromsensoren 5 können Wärmeströme und bei Kalibrierung auf die zugehörigen Flächen Wärmeströme pro Flächeneinheit, also spezifische Wärmeströme, gemessen werden. Im Folgenden werden beispielhaft eine erste Teilfläche 6 und eine zweite Teilfläche 7 der Wärmetauscherwände 4 betrachtet. Die Verbrennungsanlage weist mehrere hintereinander angeordnete Strahlungs- oder Konvektionszüge 8 mit unterschiedlichen Wärmetauschern 9 und/oder Überhitzern 11 auf. Hier wird der erste Strahlungszug 10 umfassend den Wärmetauscher 9 exemplarisch betrachtet.

Die Verbrennungsanlage 1 kann mit unterschiedlichen Brennstoffen 12 betrieben werden, die dem Brennraum 2 über einen Brennstoffeinlass 13 zugeführt und auf einem Verbrennungsrost 14 unter Zufuhr von Verbrennungsluft 15 verbrannt werden. Die dabei entstehende Asche 16 wird mittels eines Ascheförderers 17 zu einem Ascheauslass 18 transportiert. Dort ist eine Sensorik 19, beispielsweise für den Massefluss und die Temperatur, angeordnet, mit der die austretende Wärmeleistung gemessen werden kann. Das bei der Verbrennung entstehende heiße Rauchgas 20 steigt im Kessel 3 zunächst nach oben und wird zu einem Rauchgasauslass 21 geführt. In dem ersten Strahlungszug 10 befindet sich mindestens ein Temperatursensor 22 zur Bestimmung der Rauchgastemperatur. Weitere nicht dargestellte Sensoren können vorhanden sein, um die Massenströme von Brennstoff, Verbrennungsluft, Rauchgas, Asche und Wärmeträgermedien sowie deren jeweilige Temperatur zu bestimmen. Je mehr Messwerte zur Verfügung stehen, desto genauer kann der Zustand der Anlage festgestellt und mit einem Bilanzierungsmodell verglichen werden. Zu diesem Zweck ist eine Bilanzierungseinheit 23 vorhanden, der solche Messwerte über Signalleitungen 24 zugeführt werden. Diese kann die Messwerte in einem Modell verarbeiten oder für ein sogenanntes Expertensystem verwenden, welches dann viele Informationen über das System liefern und speichern kann. Insbesondere können in so einer Bilanzierungseinheit 23 auch Erfahrungswerte über bereits aufgetretene Messwerte und/oder Betriebszustände gespeichert sein oder werden. Für die vorliegende Erfindung sind beispielsweise Erfahrungswerte für Rauchgastemperaturen am Rauchgasauslass 21 in Abhängigkeit von bestimmten Betriebszuständen und/oder von den verwendeten Brennstoffen 12 bzw. deren Heizwert von Bedeutung.

Weiterhin ist eine Steuereinheit 25 vorhanden für die Steuerung oder Regelung mindestens einer Reinigungseinrichtung 26 für die erste Teilfläche 6 der Wärmetauscherflächen 4, insbesondere eines Wasserlanzenbläsers, eines Sprühreinigungssystems oder eines Rußbläsers. Dieser Steuereinheit 25 werden Messwerte oder daraus abgeleitete Werte von mindestens einem Wärmestromsensor 5, der der ersten Teilfläche 6 zugeordnet ist, zugeleitet. Dies kann direkt geschehen oder über eine Übermittlungsleitung 27 von der Bilanzierungseinheit 23. Die Steuereinheit 25 enthält übliche Informationen und Einrichtungen zur Steuerung der Reinigungseinrichtung 26, wie sie erforderlich sind, um die Teilfläche 6 bei Bedarf korrekt zu reinigen. Außerdem ermittelt die Steuereinheit 25 aus den ihr zugeführten Daten die Reinigungsintervalle bzw. die Zeitpunkte, zu denen eine Reinigung durchgeführt wird. Hier kommen die erfindungsgemäßen Auswahlkriterien zur Anwendung. Neben maximal zugelassenen Reinigungsintervallen können Messwerte von Wärmestromsensoren 5, Rauchgastemperaturen und andere Messwerte mit Erfahrungswerten verglichen und bei Bedarf wird anhand vorgebbarer Kriterien eine Reinigung ausgelöst. Eine Reinigungseinrichtung 26 kann zwei oder mehreren Teilflächen 6, 7 zugeordnet sein und es können Informationen von mehreren Wärmestromsensoren 5 verarbeitet werden. Die Verbrennungsanlage wird im Allgemeinen viele so gesteuerte und/oder geregelte Reinigungseinrichtungen aufweisen.

Insgesamt ergibt sich eine Regelung der Reinigungsintervalle von Reinigungseinrichtungen, die bei unterschiedlichen Betriebszuständen automatisch bedarfsgerecht reinigen und unnötige Reinigungszyklen vermeiden. In Verbindung mit einer Bilanzierungseinheit ist das System in gewissem Sinn lernfähig, weil im Laufe der Zeit immer mehr Erfahrungswerte für immer mehr unterschiedliche Betriebsbedingungen gesammelt und für die Steuerung und/oder Regelung der Reinigungseinrichtungen zur Verfügung gestellt werden können.

### Bezugszeichenliste

- 1: Verbrennungsanlage
- 2: Brennraum
- 3: Kessel
- 4: Wärmetauscherwand
- 5: Wärmestromsensoren
- 6: Erste Teilfläche
- 7: Zweite Teilfläche
- 8: Strahlungs- und Konvektionszüge
- 9: Wärmetauscher
- 10: Erster Strahlungszug
- 11: Überhitzer
- 12: Brennstoffe
- 13: Brennstoffeinlass
- 14: Verbrennungsrost
- 15: Verbrennungsluft
- 16: Asche
- 17: Ascheförderer
- 18: Ascheauslass
- 19: Sensorik
- 20: Rauchgas
- 21: Rauchgasauslass
- 22: Temperatursensor
- 23: Bilanzierungseinheit
- 24: Signalleitungen
- 25: Steuereinheit
- 26: Reinigungseinrichtung
- 27: Übermittlungsleitung

## Patentansprüche

1. Verfahren zur Erhöhung des Wirkungsgrades einer Verbrennungsanlage (1), insbesondere eines Müllverbrennungs- oder Biomassekraftwerks, wobei die Verbrennungsanlage (1) einen Rauchgasauslass (21) für Rauchgas (20) mit einer Rauchgastemperatur aufweist, sowie mindestens eine Wärme auf ein Wärmeträgermedium übertragende Wärmetauscherwand (4), von der zumindest eine erste vorgegebene Teilfläche (6) während des Betriebes der Verbrennungsanlage (1) durch Ablagerungen in ihrer Funktion beeinträchtigt und deshalb in vorgebbaren Zeitintervallen durch ein Reinigungsmedium aus einer Reinigungseinrichtung (26) abgereinigt wird, wobei die Zeitintervalle an Hand von mit Wärmestromsensoren (5) durchgeführten Wärmestrommessungen an der ersten Teilfläche (6) und/oder der daraus ermittelten zeitlichen Veränderung des Wärmestromes durch die erste Teilfläche (6) geregelt werden, wobei eine Abreinigung nur ausgelöst wird, wenn ein erster vorgebbarer Schwellwert des Wärmestroms unterschritten wird **dadurch gekennzeichnet, dass** gleichzeitig mindestens eine der folgenden Bedingungen erfüllt ist:
- die zeitliche Veränderung des Wärmestromes unterschreitet einen zweiten vorgebbaren Schwellwert,
- die Differenz zu einem, an einer zweiten Teilfläche (7) als Referenz gemessenen Wärmestrom überschreitet einen vorgebbaren Differenzwert,
- die Rauchgastemperatur überschreitet einen zuvor ermittelten und gespeicherten Erfahrungswert, der für ähnliche Betriebsbedingungen der Verbrennungsanlage (1) nach einer früher vorgenommenen Abreinigung der ersten Teilfläche (6) ermittelt wurde, um einen vorgebbaren Betrag,
- es ist eine vorgebbare Mindestzeit seit der letzten Reinigung vergangen,
- es findet keine gleichzeitige Reinigung einer anderen Teilfläche (7) statt,
- die Verbrennungsanlage (1) ist seit einem vorgebbaren Zeitintervall in einem stationären Betriebszustand.

2. Verfahren nach Anspruch 1, wobei mindestens zwei der genannten Bedingungen erfüllt sein müssen.

3. Verfahren nach Anspruch 1, wobei alle genannten Bedingungen erfüllt sein müssen.

4. Verfahren nach Anspruch 1, wobei ein Erfahrungswert für die Rauchgastemperatur als Bedingung verarbeitet wird, **dadurch gekennzeichnet, dass** Erfahrungswerte der Rauchgastemperatur für unterschiedliche Heizwerte von in der Verbrennungsanlage (1) verwendeten Brennstoffen (12) oder Brennstoffgemischen und für unterschiedliche Luftströme gesammelt und gespeichert werden, so dass Erfahrungswerte für eine Mehrzahl von Betriebszuständen, vorzugsweise für alle regelmäßig vorkommenden, zur Verfügung stehen.

5. Verfahren nach einem der vorhergehenden Ansprüche, **dadurch gekennzeichnet, dass** ein Bilanzwert anhand eines während des Betriebes angewandten Bilanzierungsmodells aller Energie- und Massenströme zu und aus der Verbrennungsanlage (1) kontinuierlich oder periodisch ermittelt wird, der das Verhältnis von in der Verbrennungsanlage (1) durch Übertragung in das Wärmeträgermedium genutzter Energie zu ungenutzter Energie angibt, wobei die Wirkung einer Abreinigung der ersten Teilfläche (6) auf den Bilanzwert und auf dessen Integral über die Zeit zur Korrektur der vorgebbaren Zeitintervalle verarbeitet wird.

6. Verfahren nach einem der vorhergehenden Ansprüche, **dadurch gekennzeichnet, dass** die Wärmeströme durch mindestens zwei Teilflächen (6, 7) kontinuierlich gemessen und der Einfluss der Reinigung einer ersten Teilfläche (6) auf den Wärmestrom mindestens einer zweiten Teilfläche (7) zur Korrektur der vorgebbaren Zeitintervalle verarbeitet wird.

7. Verfahren nach einem der vorhergehenden Ansprüche, **dadurch gekennzeichnet, dass** die Reinigungseinrichtung (26) mit Wasser, Dampf oder Luft reinigt, insbesondere ein Wasserlanzenbläser, ein Sprühreinigungssystem oder ein Rußbläser ist.

8. Verfahren nach einem der vorhergehenden Ansprüche, **dadurch gekennzeichnet, dass** Messungen einer Mehrzahl von Wärmestromsensoren (5) für die Regelung einer Reinigungseinrichtung (26) herangezogen werden.

## Claims

1. Method for increasing the efficiency of an incineration plant (1), in particular a waste incineration plant or a biomass incineration plant, wherein the incineration plant (1) has a flue gas outlet (21) for flue gas (20) having a flue gas temperature, and at least one heat transfer wall (4) that transfers heat on a heat transfer medium, the function of at least one first partial surface (6) of the heat transfer wall (4) is affected by deposits during the operation of the incineration plant (1) and therefore the at least one first partial surface (6) is cleaned by a cleaning medium from a cleaning device (26) at predeterminable time periods, wherein the time periods are controlled depending on heat flow measurements at the first partial surface executed by heat flow sensors (5) and/or depending on temporal changes of the heat flow through the first partial surface (6) that are determined thereof, wherein the cleaning is only initiated, when the heat flow falls below a first predetermined threshold value of the heat flow, **characterized in that** at least one of the following requirements are fulfilled simultaneously:
- the temporal change of the heat flow falls below a second predetermined threshold value,
- the difference to a heat flow which is measured at a second partial surface (7) as a reference exceeds a predeterminable difference value,
- the flue gas temperature exceeds a beforehand determined and stored empirical value, which was determined for similar operating conditions of the incineration plant after a previously executed cleaning of the first partial surface (6), by a predeterminable value,
- a predeterminable minimum period since the last cleaning has passed,
- no simultaneous cleaning of the different partial surface (7) is executed,
- the incineration plant (1) is in a stationary operating condition since a predeterminable time period.

2. Method according to claim 1, wherein at least two of the mentioned requirements are fulfilled.

3. Method according to claim 1, wherein all of the mentioned requirements are fulfilled.

4. Method according to claim 1, wherein an empirical value for the flue gas temperature as a requirement is processed, **characterized in that**, empirical values of the flue gas temperature are collected and stored for different heat values of combustibles (12) or mixes of combustibles being used in the incineration plant (1) and for different air streams, such that empirical values for a plurality of operating conditions, preferable for all regularly occurring ones, are available.

5. Method according to one of the preceding claims, **characterized in that** a balance value is continuously or periodically determined by means of a balancing model, being employed during the operation, of all energy and mass flows to and out of the incineration plant (1), which indicates the ratio between energy being used in the incineration plant (1) by transfer in the heat transfer medium and unused energy, wherein the effect of a cleaning of the first partial surface (6) on the balance value and its integral over the time for correcting the predetermined time periods is processed.

6. Method according to one of the preceding claims, **characterized in that** the heat flows through at least two partial surfaces (6, 7) are measured continuously and the influence of the cleaning of the first partial surface (6) on the heat flow of at least one second partial surface (7) is processed for correcting the predeterminable time periods.

7. Method according to one of the preceding claims, **characterized in that** the cleaning device (26) cleans with water, steam or air, in particular being a water lance blower, a spray cleaning system or a sootblower.

8. Method according to one of the preceding claims, **characterized in that** measurements of a plurality of heat flow sensors (5) are used for controlling one of the cleaning devises (26).

## Revendications

1. Procédé d'amélioration du degré d'efficacité d'une installation d'incinération (1), notamment d'une centrale d'incinération de déchets ou de biomasse, l'installation d'incinération (1) comportant une évacuation de gaz de fumée (21) pour le gaz de fumée (20) avec une température de gaz de fumée, ainsi qu'au moins une chaleur sur une paroi d'échangeur thermique (4) transmettant l'agent caloporteur, la présence de dépôts au niveau de ladite paroi entravant l'au moins une première surface partielle (6) prédéfinie dans sa fonction pendant le fonctionnement de l'installation d'incinération (1) et celle-ci devant donc être épurée à des intervalles de temps prédéfinissables par le biais d'un agent de nettoyage provenant d'un dispositif de nettoyage (26), les intervalles de temps étant réglés à l'aide de mesures de courant de chaleur effectuées à l'aide de capteurs de courant de chaleur (5) au niveau de la première surface partielle (6) et/ou de la variation dans le temps, calculée à partir de ladite surface, du courant de chaleur traversant la première surface partielle (6), une épuration n'étant déclenchée que lorsque l'on passe en dessous d'une première valeur seuil prédéfinissable du courant de chaleur, **caractérisé en ce que** simultanément au moins une des conditions suivantes est remplie :
- la variation dans le temps du courant de chaleur passe en dessous d'une deuxième valeur seuil prédéfinissable ;
- la différence par rapport à un courant de chaleur, mesuré au niveau d'une deuxième surface partielle (7) servant de référence, dépasse une valeur de différence prédéfinissable ;
- la température de gaz de fumée dépasse d'une valeur prédéfinissable une valeur pratique précédemment calculée et mémorisée, cette valeur ayant été calculée pour des conditions de fonctionnement similaires de l'installation d'incinération (1) après une épuration précédemment réalisée de la première surface partielle (6) ;
- un temps minimal prédéfinissable est écoulé depuis le dernier nettoyage ;
- il n'y a pas de nettoyage au même moment d'une autre surface partielle (7) ;
- l'installation d'incinération (1) est depuis un intervalle de temps prédéfinissable dans un état de fonctionnement stationnaire.

2. Procédé selon la revendication 1, au moins deux desdites conditions devant être remplies.

3. Procédé selon la revendication 1, toutes lesdites conditions devant être remplies.

4. Procédé selon la revendication 1, une valeur pratique pour la température de gaz de fumée étant traitée comme condition, **caractérisé en ce que** les valeurs pratiques de la température de gaz de fumée sont collectées et mémorisées pour différentes valeurs de chauffage des combustibles (12) ou mélanges de combustible utilisés dans l'installation d'incinération (1) et pour différents flux d'air, de sorte que les valeurs pratiques sont mises à disposition pour une pluralité d'états de fonctionnement, de préférence pour tous les états survenant régulièrement.

5. Procédé selon l'une quelconque des revendications précédentes, **caractérisé en ce qu'**une valeur de bilan est calculée en continu ou de façon périodique à l'aide d'un modèle d'établissement de bilan de tous les flux d'énergie et débits massiques entrant et sortant de l'installation d'incinération (1) utilisé pendant le fonctionnement, ladite valeur de bilan indiquant le rapport de l'énergie utilisée dans l'installation d'incinération (1) par transmission dans l'agent caloporteur sur l'énergie non utilisée, l'effet d'une épuration de la première surface partielle (6) sur la valeur de bilan et sur son intégrale par rapport à la durée étant traité pour corriger les intervalles de temps prédéfinissables.

6. Procédé selon l'une quelconque des revendications précédentes, **caractérisé en ce que** les courants de chaleur sont mesurés en continu à travers au moins deux surfaces partielles (6, 7) et que l'influence du nettoyage d'une première surface partielle (6) sur le courant de chaleur d'au moins une deuxième surface partielle (7) est traitée pour corriger les intervalles de temps prédéfinissables.

7. Procédé selon l'une quelconque des revendications précédentes, **caractérisé en ce que** le dispositif de nettoyage (26) nettoie à l'eau, la vapeur ou l'air et qu'il est notamment une lance à eau, un système de nettoyage par pulvérisation ou un système de ramonage.

8. Procédé selon l'une quelconque des revendications précédentes, **caractérisé en ce que** les mesures d'une pluralité de capteurs de courant de chaleur (5) sont utilisées pour le réglage d'un dispositif de nettoyage (26).
